# EUROPEAN PATENT APPLICATION

(11) **EP 4 277 337 A1**
(43) Date of publication of application: **15.11.2023**
(21) Application number: 21918296.1
(22) Date of filing: 13.01.2021
(51) Int. Cl.: H04W 24/10, H04W 36/00

(54) **WIRELESS COMMUNICATION METHOD, TERMINAL DEVICE AND NETWORK DEVICE**

(71) Applicant: GUANGDONG OPPO MOBILE TELECOMMUNICATIONS CORP., LTD., Dongguan, Guangdong 523860 (CN)
(72) Inventor: FAN, Jiangsheng, Dongguan, Guangdong 523860 (CN)
(74) Representative: Taor, Simon Edward William
(86) International application number: PCT/CN2021/071566
(87) International publication number: WO 2022/151081

(57) **Abstract**

A wireless communication method, a terminal device and a network device are provided. The method includes: obtaining, by a terminal device, characteristic information of a neighbor cell; and transmitting, by the terminal device, first information to a network device, the first information including the characteristic information of the neighbor cell and/or characteristic information of the terminal device.

## Description

### TECHNICAL FIELD

The embodiments of the present disclosure relate to communication technology, and more particularly, to a wireless communication method, a terminal device and a network device.

### BACKGROUND

In the New Radio (NR) system, satellite communication is considered to provide communication services to users. Due to the long distance between a terminal device and a satellite, the signal transmission delay between the terminal device and the satellite is relatively large, and it is not suitable for transmission of delay-sensitive services of the terminal device. Therefore, for a terminal device, how to perform neighbor cell measurement such that the terminal device can reselect from a satellite cell to a terrestrial cell or handover to the terrestrial cell is a problem to be solved.

### SUMMARY

The present disclosure provides a wireless communication method, a terminal device, and a network device, capable of achieving mobility control between a satellite communication system and a terrestrial communication system.

In a first aspect, a wireless communication method is provided. The method includes: obtaining, by a terminal device, characteristic information of a neighbor cell; and transmitting, by the terminal device, first information to a network device, the first information including the characteristic information of the neighbor cell and/or characteristic information of the terminal device.

In a second aspect, a wireless communication method is provided. The method includes: receiving, by a network device, first information transmitted by a terminal device, the first information including characteristic information of a neighbor cell and/or characteristic information of the terminal device.

In a third aspect, a terminal device is provided. The terminal device is configured to perform the method according to the above first aspect or any implementation thereof.

In particular, the terminal device includes one or more functional modules configured to perform the method according to the above first aspect or any implementation thereof.

In a fourth aspect, a network device is provided. The network device is configured to perform the method according to the above second aspect or any implementation thereof.

In particular, the network device includes one or more functional modules configured to perform the method according to the above second aspect or any implementation thereof.

In a fifth aspect, a terminal device is provided. The terminal device includes a processor and a memory. The memory has a computer program stored thereon, and the processor is configured to invoke and execute the computer program stored in the memory to perform the method according to the above first aspect or any implementation thereof.

In a sixth aspect, a network device is provided. The network device includes a processor and a memory. The memory has a computer program stored thereon, and the processor is configured to invoke and execute the computer program stored in the memory to perform the method according to the above second aspect or any implementation thereof.

In a seventh aspect, a chip is provided. The chip is configured to perform the method according to any of the above first and second aspects or any implementation thereof.

In particular, the chip includes a processor configured to invoke and execute a computer program from a memory, to cause a device provided with the apparatus to perform the method according to any of the above first and second aspects or any implementation thereof.

In an eighth aspect, a computer-readable storage medium is provided. The computer-readable storage medium stores a computer program that causes a computer to perform the method according to any of the above first and second aspects or any implementation thereof.

In a ninth aspect, a computer program product is provided. The computer program product includes computer program instructions that cause a computer to perform the method according to any of the above first and second aspects or any implementation thereof.

In a tenth aspect, a computer program is provided. The computer program, when executed on a computer, causes the computer to perform the method according to any of the above first and second aspects or any implementation thereof.

With the above technical solutions, the network device can obtain the characteristic information of the neighbor cell and/or the characteristic information of the terminal device from the terminal device, and further perform mobility control between the satellite communication system and the terrestrial communication system, such as cell reselection, cell handover and the like according to the characteristic information of the neighbor cell and/or the characteristic information of the terminal device reported by the terminal device, so as to avoid the complexity for a satellite cell to maintain a large amount of dynamic terrestrial cell information, while increasing the flexibility of the terminal device to measure terrestrial cells.

### BRIEF DESCRIPTION OF DRAWINGS

FIG. 1 is a schematic diagram showing an architecture of a communication system according to an embodiment of the present disclosure.
FIG. 2 is a schematic interaction diagram illustrating a wireless communication method according to an embodiment of the present disclosure.
FIG. 3 is a schematic interaction diagram illustrating a wireless communication method according to an embodiment of the present disclosure.
FIG. 4 is a schematic block diagram of a terminal device according to an embodiment of the present disclosure.
FIG. 5 is a schematic block diagram of a network device according to an embodiment of the present disclosure.
FIG. 6 is a schematic block diagram of a communication device according to an embodiment of the present disclosure.
FIG. 7 is a schematic block diagram of a chip according to an embodiment of the present disclosure.
FIG. 8 is a schematic block diagram of a communication system according to an embodiment of the present disclosure.

### DESCRIPTION OF EMBODIMENTS

The technical solutions in the embodiments of the present disclosure will be described below with reference to the figure in the embodiments of the present disclosure. Obviously, the described embodiments are only some embodiments, rather than all embodiments, of the present disclosure. All other embodiments obtained by those skilled in the art based on the embodiments in the present disclosure without inventive efforts are to be encompassed by the scope of the present disclosure.

The solutions according to the embodiments of the present disclosure can be applied to various communication systems, including for example: Global System of Mobile Communication (GSM), Code Division Multiple Access (CDMA) system, Wideband Code Division Multiple Access (WCDMA) system, General Packet Radio Service (GPRS), Long Term Evolution (LTE) system, Advanced Long Term Evolution (LTE-A) system, New Radio (NR) system, evolved NR system, LTE-based access to unlicensed spectrum (LTE-U) system, NR-based access to unlicensed spectrum (NR-U) system, Non-Terrestrial Network (NTN) system, Universal Mobile Telecommunication System (UMTS), Wireless Local Area Networks (WLAN), Wireless Fidelity (WiFi), the 5^{th} Generation (5G) system, or other communication systems.

Generally, traditional communication systems can support a limited number of connections and are easy to implement. However, with the development of communication technology, mobile communication systems will support not only traditional communication, but also e.g., Device to Device (D2D) communication, Machine to Machine (M2M) communication, and Machine Type Communication (MTC), Vehicle to Vehicle (V2V) communication, Vehicle to everything (V2X) communication, etc. The embodiments of the present disclosure can also be applied to these communication systems.

Optionally, the communication system of an embodiment of the present disclosure may be applied to a Carrier Aggregation (CA) scenario, a Dual Connectivity (DC) scenario, a Standalone (SA) network deployment scenario, and the like.

Optionally, the communication system of an embodiment of the present disclosure may be applied to unlicensed spectrum or shared spectrum. Alternatively, the communication system of an embodiment of the present disclosure may be applied to licensed spectrum or non-shared spectrum.

The embodiments of the present disclosure are described in conjunction with a network device and a terminal device. The terminal device may refer to a User Equipment (UE), an access terminal, a user unit, a user station, a mobile station, a remote station, a remote terminal, a mobile device, a user terminal, a terminal, a wireless communication device, a user agent, or a user device. The terminal device may be a station (ST) in a WLAN, a cellular phone, a cordless phone, a Session Initiation Protocol (SIP) phone, a Wireless Local Loop (WLL) station, a Personal Digital Assistant (PDA) device, a handheld device or a computing device having a wireless communication function, another processing device connected to a wireless modem, a vehicle-mounted device, a wearable device, a terminal device in the next generation communication system (e.g., NR network), or a terminal device in a future evolved Public Land Mobile Network (PLMN), etc.

In the embodiments of the present disclosure, the terminal device can be deployed on land, including indoor or outdoor, handheld, worn, or vehicle-mounted, deployed on water (e.g., on a ship), or deployed in the air (e.g., on an airplane, a balloon, a satellite, etc.).

In the embodiments of the present disclosure, the terminal device may be a mobile phone, a tablet computer (Pad), a computer with a wireless transceiver function, a Virtual Reality (VR) terminal device, an Augmented Reality (AR) terminal device, a wireless terminal in industrial control, a wireless terminal device in self driving, a wireless terminal device in remote medical, a wireless terminal device in smart grid, a wireless terminal device in transportation safety, a wireless terminal device in smart city, or a wireless terminal device in smart home.

As non-limiting examples, in an embodiment of the present disclosure, the terminal device may also be a wearable device. The wearable device, also known as wearable smart device, is a general term for wearable devices that are intelligently designed and developed from everyday wear, such as glasses, gloves, watches, clothes, and shoes, by applying wearable technologies. A wearable device is a portable device that can be directly worn on or integrated into a user's clothes or accessories. A wearable device is not only a kind of hardware device, but can also provide powerful functions based on software support, data interaction, and cloud interaction. In a broad sense, wearable smart devices may include full-featured, large-sized devices that can provide full or partial functions without relying on smart phones, such as smart watches or smart glasses, and devices that only focus on a certain type of application function and need to cooperate with other devices such as smart phones for use, such as various smart bracelets and smart jewelries for physical sign monitoring.

In an embodiment of the present disclosure, the network device may be a device communicating with mobile devices. The network device may be an Access Point (AP) in a WLAN, a base station such as Base Transceiver Station (BTS) in a GSM system or a CDMA system, a base station such as NodeB (NB) in a WCDMA system, a base station such as Evolutional Node (eNB or eNodeB) in an LTE system, or a relay station, an access point, a vehicle-mounted device, a wearable device, a network device or base station (e.g., gNB) in an NR network, a network device in a future evolved PLMN, or a network device in an NTN.

As a non-limiting example, in an embodiment of the present disclosure, the network device may have mobile characteristics, e.g., the network device may be a mobile device. Optionally, the network device may be a satellite or a balloon station. For example, the satellite may be a Low Earth Orbit (LEO) satellite, a Medium Earth Orbit (MEO) satellite, a Geostationary Earth Orbit (GEO) satellite, a High Elliptical Orbit (HEO) satellite, etc. Optionally, the network device may also be a base station provided in a location such as land or water.

In the embodiment of the present disclosure, the network device may provide services for a cell, and the terminal device may communicate with the network device over transmission resources, e.g., frequency domain resources or frequency spectral resources, used in the cell. The cell may be a cell corresponding to the network device (e.g., base station). The cell may belong to a macro base station or a base station corresponding to a small cell. The small cell here may include a metro cell, a micro cell, a pico cell, a femto cell, or the like. These small cells have characteristics such as small coverage and low transmission power, and are suitable for providing high-rate data transmission services.

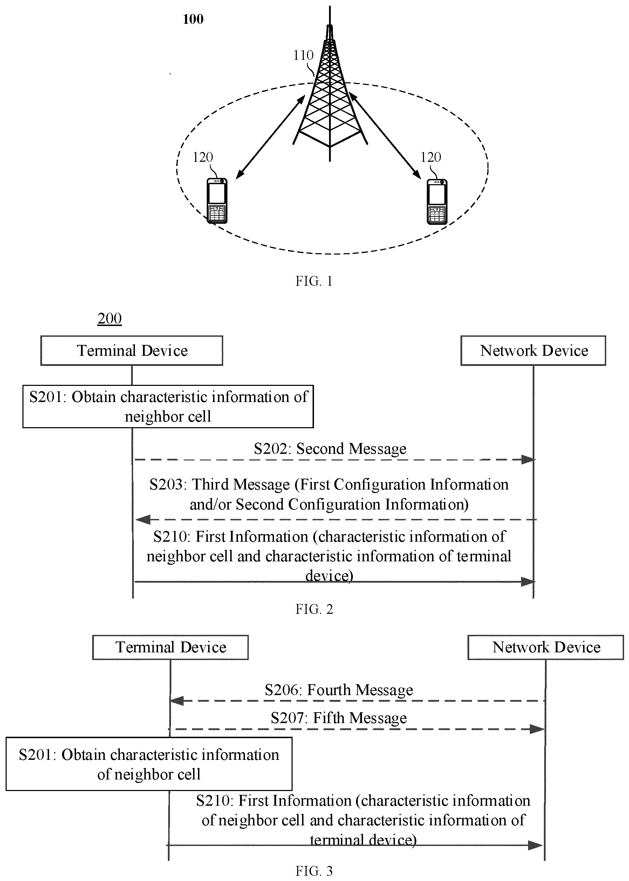

Exemplarily, FIG. 1 shows a communication system 100 in which an embodiment of the present disclosure can be applied. A shown in FIG. 1, the communication system 100 may include a network device 110 which may be a device communicating with a terminal device 120 (or referred to as communication terminal or terminal). The network device 110 may provide communication coverage for a particular geographic area, and may communicate with terminal devices located within the coverage.

FIG. 1 exemplarily shows one network device and two terminal devices. Optionally, the communication system 100 may include multiple network devices, and the coverage of each network device may include other numbers of terminal devices. The embodiment of the present disclosure is not limited to this.

Optionally, the communication system 100 may also include other network entities such as a network controller or a Mobility Management Entity (MME). The embodiment of the present disclosure is not limited to this.

It can be appreciated that, in the embodiments of the present disclosure, a device having a communication function in a network/system may be referred to as a communication device. Taking the communication system 100 shown in FIG. 1 as an example, the communication devices may include the network device 110 and the terminal device 120 with communication functions. The network device 110 and the terminal device 120 may be the specific devices described above, and details thereof will be omitted here. The communication devices may also include other devices in the communication system 100, e.g., other network entities such as a network controller, an MME, etc., and the embodiment of the present disclosure is not limited to any of these examples.

In addition, the terms "system" and "network" may often be used interchangeably herein. The term "and/or" as used herein only represents a relationship between correlated objects, including three relationships. For example, "A and/or B" may mean A only, B only, or both A and B. In addition, the symbol "P' as used herein represents an "or" relationship between the correlated objects preceding and succeeding the symbol.

It can be appreciated that the term "indication" as used in the embodiments of the present disclosure may be a direct indication, an indirect indication, or an association. For example, if A indicates B, it may mean that A directly indicates B, e.g., B can be obtained from A. Alternatively, it may mean that A indicates B indirectly, e.g., A indicates C and B can be obtained from C. Alternatively, it may mean that there is an association between A and B.

In the description of the embodiments of the present disclosure, the term "corresponding" may mean that there is a direct or indirect correspondence between the two, or may mean that there is an association between the two, or that they are in a relation of indicating and indicated, configuring or configured, or the like.

In the embodiments of the present disclosure, "predefined" may implemented as pre-stored in one or more devices (for example, including a terminal device and a network device) corresponding codes, tables or other means that can be used to indicate related information, and the present disclosure is not limited to its specific implementation. For example, "predefined" may refer to defined in protocols.

In the embodiments of the present disclosure, "protocols" may refer to standard protocols in the communication field, including e.g., the LTE protocol, the NR protocol, and related protocols applied in future communication systems. The present disclosure is not limited to any of these examples.

In the 5G network environment, in order to reduce air interface signaling and quickly restore wireless connections and data services, a new Radio Resource Control (RRC) state is defined, RRC_INACTIVE state. This state is different from RRC_IDLE and RRC_CONNECTED) states.

In the RRC_IDLE state, mobility is terminal device-based cell selection and reselection, paging is initiated by a Core Network (CN), and the paging area is configured by the CN. There is no terminal device Access Stratum (AS) context at the base station, and there is no RRC connection.

In the RRC _CONNECTED state, there is an RRC connection, and the base station and the terminal device have the terminal device AS context. The network device knows the location of the terminal device at the specific cell level. Mobility is mobility controlled by network device. Unicast data can be transmitted between the terminal device and the base station.

In the RRC_INACTIVE state, mobility is terminal device-based cell selection and reselection, there is a connection between CN-NR, there is terminal device AS context on a certain base station, paging is triggered by a Radio Access Network (RAN), and RAN-based paging area is managed by the RAN, and the network device knows the location of the terminal device at the RAN-based paging area level.

It should be noted that, in the embodiments of the present disclosure, the inactive state may also be referred to as deactivated state, and the present disclosure is not limited to this.

### Mobility Control of Terminal

The mobility control of the terminal device in the RRC_IDLE state or RRC_INACTIVE state refers to the cell selection/reselection processes of the terminal device. These processes are performed by the terminal device. The cell selection process is mainly based on the subscription information maintained in the Non-Access Stratum (NAS) of the terminal device, or the cell search history record information recorded by the terminal device. The cell reselection process is slightly different, where the terminal device needs to perform measurement according to the frequency point configuration from the network device, and decides which cell to reselect according to measurement results on the serving frequency point and the neighbor frequencies and the priority cell reselection criteria for the corresponding frequency points.

The mobility control of the terminal device in the RRC_CONNECTED state refers to the handover process of the terminal device. This process is controlled by the network device, with reference to the cell measurement results reported by the terminal device. The neighbor cell measurement by the terminal device is based on the configuration from the network device, and the measurement results are reported when the measurement reporting condition is met.

To summarize, except the cell selection process, the cell reselection or handover process of the terminal device requires the measurement configuration information configured by the network. Generally, the frequency point deployment of the neighbor cells associated with a cell is managed by the Operation Administration and Maintenance (OAM) pre-configuration, and the cell notifies the terminal device of the information on the neighbor frequency to be measured via system information or dedicated signaling.

The terminal device obtains signal quality parameters of a cell by measuring a reference signal transmitted by a network, including Reference Signal Received Power (RSRP), Reference Signal Received Quality (RSRQ), Signal to Interference plus Noise Ratio (SINR) or the like. Types of reference signals may include e.g., Synchronization Signal Block (SSB) or Channel State Information Reference Signal (CSI-RS).

The measurement behavior of the terminal device is carried out according to frequency points, but since reference signals of a cell are periodically configured in the time dimension, in order to assist the terminal device to quickly find a measurement reference signal of a neighbor cell, the serving cell will provide time dimension configuration information of the reference signal of the neighbor cell, i.e., SS/PBCH block Measurement Timing Configuration (SMTC) configuration information. The SMTC configuration information is configured at granularity of frequency points, after obtaining the SMTC configuration information of a frequency point, the terminal device only needs to search for the reference signal at the frequency point according to the SMTC.

The SMTC configuration information contains at least one of the following parameters:
a measurement reference signal period, an offset of a measurement reference signal start point relative to a measurement reference period, and a duration of the measurement reference signal within a measurement reference period. The maximum duration of the measurement reference signal in the SMTC configuration can be up to 5ms, and the SMTC configuration information may also be referred to as an SMTC window.

The SMTC configuration information is typically configured based on time of a Primary Cell (PCell). Due to the small cell coverage of the terrestrial cellular system, in an overlapping coverage area of cells, the delay difference between two cells reaching the overlapping coverage area of the cells is very small, typically on the order of microseconds (µs), whereas the SMTC window is on the order of milliseconds (ms). Therefore, when the terminal device is measuring in the terrestrial system, the deviation caused by the propagation delay difference between terrestrial cells to the SMTC window is basically negligible.

For measurement by a terminal in the RRC_CONNECTED state, the network device not only needs to configure the SMTC window corresponding to the measurement frequency point for the terminal device, but also needs to configure a Measurement Gap (MG), because the terminal device needs to receive data in the connected state. A terminal device with only a single receiving antenna is not capable of receiving connected state data and measuring a signal from a neighbor cell/neighbor frequency at the same time. Hence, the network device needs to coordinate the resources scheduled for data and measurement. During the measurement gap, the terminal device does not receive user data scheduled by the network device, and the network device does not transmit user data during this period. Similarly, outside the measurement gap, the terminal device cannot measure a signal from the neighbor cell/neighbor frequency, which would otherwise affect user data reception. The network device autonomously decides when to schedule the data. The measurement gap window can be configured as up to 6ms.

For measurement by a terminal in the RRC_IDLE state or RRC_INACTIVE state, compared with the measurement in the RRC _CONNECTED state, the network device only broadcasts frequency point information on a frequency point to be measured and an SMTC configuration information associated with the frequency point via system information. Therefore, the terminal device in the RRC_IDLE state or RRC_INACTIVE state does not need to receive any user data transmitted by the network device, and the terminal device can autonomously decide to complete the signal measurement for neighbor cell/neighbor frequency based on the SMTC configuration.

In the New Radio (NR) system, it is considered to use satellite communication to provide communication services to users. The coverage diameter of satellite beams ranges from hundreds of kilometers to thousands of kilometers, and the coverage diameter of a ground cellular cell is several hundred meters. From the perspective of neighbor cells, when a satellite beam coexists with several cellular cells in the same geographical area, the number of terrestrial neighbor cells associated with a satellite beam may be huge (for example, tens of thousands), due to the high-speed movement of LEO/MEO with respect to the earth, it is almost impossible for a satellite cell to dynamically maintain a large number of terrestrial neighbor cells. Moreover, the terrestrial cellular network is discretely distributed. It is difficult for the satellite cell to know the details of the cell deployment of the terrestrial network operator. It is generally believed that it is unnecessary and infeasible for the satellite cell to maintain the deployment of terrestrial cells around the world, let alone measurement information such as frequencies used by these terrestrial cells.

The service delay of a terrestrial cell is much smaller than that of a satellite cell. Considering the delay sensitivity of some services, the terminal device will give priority to using the service of the terrestrial cell. Therefore, how to let a satellite cell to discover a terrestrial neighbor cell around the terminal device and direct the terminal device to perform reselection or handover from the satellite cell to the terrestrial cell is a problem to be solved.

In order to facilitate understanding of the technical solutions of the embodiments of the present disclosure, the technical solutions of the present disclosure will be described in detail below with reference to specific embodiments. As optional solutions, the above related technologies may be combined with the technical solutions of the embodiments of the present disclosure arbitrarily, and all of these combinations belong to the protection scope of the embodiments of the present disclosure. The embodiments of the present disclosure include at least part of the following content.

FIG. 2 is a schematic interaction diagram illustrating a wireless communication method 200 according to an embodiment of the present disclosure. As shown in FIG. 2, the method 200 includes the following content.

At S201, a terminal device obtains characteristic information of a neighbor cell.

At S210, the terminal device transmits first information to a network device, the first information including the characteristic information of the neighbor cell and/or characteristic information of the terminal device.

In some embodiments, the network device may be a network device in a terrestrial network, for example, a network device in a terrestrial cellular system, or may be a network device in a non-terrestrial network, such as a satellite.

In some embodiments, the first information may be used for mobility control of the terminal device by the network device, e.g., assisting a satellite system and a terrestrial system to control the mobility of terminal device.

In some embodiments of the present disclosure, the operation of the terminal device obtaining the characteristic information of the neighbor cell may include one of:
the terminal device performing neighbor cell search to obtain the characteristic information of the neighbor cell;
the terminal device performing terrestrial neighbor cell search and terrestrial neighbor cell measurement to obtain the characteristic information of the neighbor cell;
the terminal device performing non-public network measurement to obtain the characteristic information of the neighbor cell; or
the terminal device performing neighbor cell search and neighbor cell measurement to obtain the neighbor cell characteristic information.

In some embodiments, the non-public network may include an operator non-public network and/or a third-party non-public network, e.g., Stand-alone Non-public Network (SNPN), Closed Access Group (CAG) network, temporary network, or access control-related network.

In some embodiments, the characteristic information of the neighbor cell may include at least one of:
first indication information, indicating whether a terrestrial neighbor cell is near the terminal device and/or whether a neighbor cell not configured by the network device is near the terminal device;
operator-related network identification information of the neighbor cell;
Tracking Area (TA) configuration information of the neighbor cell;
frequency point configuration information of the neighbor cell;
Synchronization Measurement Timing Configuration (SMTC) information of the neighbor cell;
Cell Global Identity (CGI) configuration information of the neighbor cell;
Physical Cell Identifier (PCI) configuration information of the neighbor cell;
beam configuration information of the neighbor cell;
Sub-Carrier Spacing (SCS) configuration information of the neighbor cell;
bandwidth configuration information of the neighbor cell;
a cell-level signal measurement result of the neighbor cell; or
a beam-level measurement result of the neighbor cell.

In some embodiments of the present disclosure, the neighbor cell may include a terrestrial neighbor cell and/or a non-terrestrial neighbor cell.

In some embodiments of the present disclosure, the operator-related network identification information of the neighbor cell may include an operator-related Public Land Mobile Network (PLMN) identification of the neighbor cell, or an NPN identification, such as an SNPN identification, a CAG identification, etc.

In some embodiments of the present disclosure, the cell-level signal measurement result may include at least one of:
cell-level RSRP, cell-level RSRQ, or cell-level SINR.

In some embodiments of the present disclosure, the beam-level signal measurement result may include at least one of:
Beam-level RSRP, beam-level RSRQ, or beam-level SINR.

The Synchronization Measurement Timing Configuration (SMTC) information of the neighbor cell may include: a period of a measurement reference signal, an offset of the start time domain position of the measurement reference signal relative to a measurement reference period, and a duration of the measurement reference signal within the measurement reference period. In some embodiments, the SMTC information may be configured at the granularity of frequency points.

In some embodiments of the present disclosure, the characteristic information of the terminal device may include at least one of:
location information of the terminal device; or
capability information of the terminal device.

It should be understood that the capability information of the terminal device may refer to capability information related to cell measurement of the terminal device.

In some embodiments of the present disclosure, the capability information of the terminal device may include at least one of:
a frequency band or frequency band combination supported by the terminal device;
a bandwidth supported by the terminal device;
whether the terminal device supports communication with a non-terrestrial cell;
whether the terminal device supports communication with a terrestrial cell;
whether the terminal device supports simultaneous communication with a non-terrestrial cell and a terrestrial cell;
whether the terminal device supports a Dual Connection (DC) function; or
whether the terminal device supports a Carrier Aggregation (CA) function.

In some embodiments of the present disclosure, the first information may be transmitted via a first message, and the first message may be used for any uplink signaling in communication between the terminal device and the network device.

In some embodiments, the first message may be uplink signaling in a random access procedure.

For a terminal device in a non-connected state, the first information may be reported to the network device in a random access procedure.

As an example, the first message may be a third message (message 3 or Msg3) in a contention-based four-step access procedure, or a first message (message A or MsgA) in a contention-based two-step access procedure.

In some other embodiments, the first message may be uplink signaling after the terminal device enters a connected state.

For example, the first message may be a first message after the random access succeeds, e.g., message 5 (Msg5).

In another example, the first message may be an uplink RRC message, an uplink Media Access Control Control Element (MAC CE), and the like.

In some embodiments of the present disclosure, as shown in FIG. 2, the method 200 may further include:

At S202, the terminal device transmits a second message to the network device, the second message being used to request the network device to transmit the first information.

In some embodiments of the present disclosure, the second message may be uplink signaling in a random access procedure. For example, the second message is a first message in a random access procedure, such as message 1 (Msg1) or MsgA, or a third message in a contention-based four-step access procedure, i.e., Msg3.

In other embodiments of the present disclosure, the second message may be uplink signaling after the terminal device enters the connected state, e.g., a first message after the random access succeeds, or an RRC message, a MAC CE, DCI, etc.

In some embodiments of the present disclosure, the second message may also indicate that the first information is available, or in other words, the terminal device has obtained the first information and can report it.

When the second message is Msg1 as an example, the second message may indicate whether the first information is available, or whether the terminal device requests to transmit the first information.

In some embodiments, the Msg1 may include a first preamble, indicating that the first information is available, or the Msg1 may include a second preamble, indicating that the first information is not available.

For example, the first preamble and the second preamble may be generated with different root sequences and/or different cyclic shifts.

In an implementation, the first preamble may be a newly added preamble, and the second preamble may be an existing preamble.

In another implementation, the first preamble and the second preamble may be different ones of existing preambles.

For example, the terminal device may be configured with 10 preambles, denoted as Preamble0 - Preamble9, the first preamble may include Preamble0 - Preamble4, and the second preamble may include Preamble5 ~ Preamble9. When the terminal device uses Preamble5 to initiate random access, the network device may determine that the first information is not available, or the terminal device does not request to report the first information. When the terminal device uses Preamble0 to initiate random access, the network device may determine that the first information is available, or the terminal device requests to report the first information.

In some embodiments of the present disclosure, as shown in FIG. 2, the method 200 may further include:
At S203, the network device transmits a third message to the terminal device, indicating that the network device allows the terminal device to transmit the first information.

That is, the network device may reply to the terminal device regarding whether to allow the terminal device to transmit the first information.

As an example, the third message may include indication information indicating whether the network device allows transmission of the first information. For example, the indication information is 1 bit, and the value of the 1 bit indicates whether the network device allows transmission of the first information. For example, a value of 1 means allowed, and a value of 0 means not allowed.

In other embodiments of the present disclosure, if the network device does not allow the terminal device to transmit the first information, it may not reply the third message to the terminal device.

In this case, if the terminal device does not receive the third message replied by the network device, it may be determined that the network device does not allow reporting of the first information.

In some other embodiments of the present disclosure, if the network device does not allow the terminal device to transmit the first information, it replies the third message to the terminal device, and the third message indicates that the network device does not allow the terminal device to transmit the first information. For example, the value of the indication information in the third message is set to 0.

In this case, if the terminal device does not receive the third message replied by the network device, it may determine that the network device does not allow reporting of the first information.

In some embodiments of the present disclosure, the terminal device may transmit the first information to the network device when the network device allows reporting of the first information.

For example, when the third message is received, the first information is transmitted to the network device. If the third message is not received, the first information is not transmitted to the network device.

In another example, when the third message is received and the third message indicates allowed, the first information is transmitted to the network device. If the third message is received and the third message indicates not allowed, the first information is not transmitted to the network device, or if the third message is not received, the first information is not transmitted to the network device.

In some embodiments of the present disclosure, the third message may be downlink signaling in a random access procedure.

For example, the third message may be a second message in a random access procedure, such as message 2 (Msg2) or MsgB, or a fourth message in a contention-based four-step access procedure, i.e., Msg4.

In some embodiments of the present disclosure, the third message may be downlink signaling after the terminal device enters the connected state, e.g., downlink RRC message, downlink MAC CE, Downlink Control Information (DCI) and the like.

In some embodiments of the present disclosure, the method 200 may further include:
the terminal device receiving first configuration information and/or second configuration information transmitted by the network device, the first configuration information being used to configure content included in the first information reported by the terminal device, and the second configuration information being used to configure a format in which the terminal device reports the first information.

In some embodiments, the first configuration information may be carried in the third message.

In some embodiments, the second configuration information may be carried in the third message.

In some embodiments, the first configuration information may be used to configure the first information to include at least one of the characteristic information of the neighbor cell in the above example.

In some embodiments, the first configuration information may be used to configure the first information to include at least one of the characteristic information of the terminal device in the above example.

In some embodiments, the second configuration information may be used to configure a format configuration of the characteristic information of the neighbor cell and/or a format configuration of the characteristic information of the terminal device.

As a non-limiting example, the format configuration of the characteristic information of the neighbor cell may used to configure at least one of:
whether to report the first indication information;
whether to report the operator-related network identification information of the neighbor cell;
whether to report the Tracking Area (TA) configuration information of the neighbor cell;
whether to report the frequency point configuration information of the neighbor cell;
whether to report the Synchronization Measurement Timing Configuration (SMTC) information of the neighbor cell;
whether to report the Cell Global Identity (CGI) configuration information of the neighbor cell;
whether to report the Physical Cell Identifier (PCI) configuration information of the neighbor cell;
whether to report the beam configuration information of the neighbor cell;
whether to report the Sub-Carrier Spacing (SCS) configuration information of the neighbor cell;
whether to report the bandwidth configuration information of the neighbor cell;
whether to report the cell-level signal measurement result of the neighbor cell; or
whether to report the beam-level measurement result of the neighbor cell.

As a non-limiting example, the format configuration of the characteristic information of the terminal device may be used to configure at least one of:
whether to report the location information of the terminal device; or
whether to report the capability information of the terminal device.

Further, the network device may further configure the format configuration of the capability information of the terminal device, e.g., including at least one of:
whether to report the frequency band or frequency band combination supported by the terminal device;
whether to report the bandwidth supported by the terminal device;
whether to report whether the terminal device supports communication with a non-terrestrial cell;
whether to report whether the terminal device supports communication with a terrestrial cell;
whether to report whether the terminal device supports simultaneous communication with a non-terrestrial cell and a terrestrial cell;
whether to report whether the terminal device supports the DC function; or
whether to report whether the terminal device supports the CA function.

Further, in some embodiments of the present disclosure, the method 200 may further include:
the terminal device determining the content included in the first information according to the first configuration information; and/or
determining the format in which the terminal device reports the first information according to the second configuration information.

In some embodiments of the present disclosure, as shown in FIG. 3, the method 200 may further include:
At S206, the terminal device transmits a fourth message to the network device, the fourth message being used to request the network device to configure configuration information for obtaining the characteristic information of the neighbor cell and/or configuration information for triggering reporting of the characteristic information of the neighbor cell.

In some embodiments of the present disclosure, the fourth message may include at least one of:
second indication information indicating that the terminal device requests a Measurement Gap (MG) configuration;
a desired MG configuration of the terminal device;
a type of task the terminal device expects to perform; or
third indication information indicating that the terminal device desires to leave a current network connection.

In some embodiments of the present disclosure, the MG configuration may include at least one of:
a period of the MG (e.g., MGRP);
a Timing Advance of the MG (e.g., MGTA);
an MG offset (e.g., gapOffset), indicating the offset of the start time of the MG within a period;
a duration of the MG (such as MGL), i.e., a duration of the gap in each period; or
a reference serving cell indicator (refServCellIndicator).

In some embodiments, the MG configuration may be replaced by an MG Pattern configuration. For example, the second indication information may include a specific MG pattern identification (ID), indicating parameters such as the period and length of the MG.

In some embodiments, the third indication information may be 1 bit, and the value of the 1 bit may indicate whether the terminal device desires to leave a current network connection. For example, a value of 1 means yes, and a value of 0 means no.

In some embodiments of the present disclosure, the fourth message may be any uplink signaling used for communication between the terminal device and the network device.

In some embodiments, the fourth message may be uplink signaling in a random access procedure.

As an example, the fourth message may be a third message (message 3 or Msg3) in a contention-based four-step access procedure, or the first message (message A, or MsgA) in a contention-based two-step access procedure.

In other embodiments, the fourth message may be uplink signaling after the terminal device enters the connected state.

For example, the fourth message may be a first message after the random access succeeds, such as message 5 (Msg5).

In another example, the fourth message may be an uplink RRC message, an uplink MAC CE, and the like.

In some embodiments of the present disclosure, as shown in FIG. 3, the method 200 may further include:
At S207, the terminal device receives third configuration information transmitted by the network device, the third configuration information being used by the terminal device to obtain the characteristic information of the neighbor cell and/or trigger the reporting of the characteristic information of the neighbor cell.

In some embodiments of the present disclosure, the third configuration information may include at least one of:
a Measurement Gap (MG) configuration allowed by the network device;
an upper limit on a number of frequency points required by the network device to be measured by the terminal device;
an upper limit on a number of cells required by the network device to be measured by the terminal device; or
a trigger condition for the terminal device to report the characteristic information of the neighbor cell.

It should be understood that the configuration information for obtaining the characteristic information of the neighbor cell and/or the configuration information for triggering the reporting of the characteristic information of the neighbor cell may be configured via the same signaling, or may be configured via different signaling, and the present disclosure is not limited to this.

In some embodiments, the terminal device may report the first information based on a trigger condition. In some other embodiments, the terminal device may not report the first information based on the trigger condition, for example, it may report the first information to the network device in response to obtaining the characteristic information of the neighbor cell or when the network device allows the terminal device to report, and the present disclosure is not limited to this.

In some embodiments of the present disclosure, the third configuration information may be transmitted via a sixth message. The sixth message may be downlink signaling in a random access procedure, or downlink signaling after the terminal device enters the connected state. For specific implementation, reference can be made to the related description of the above embodiments, and details thereof will be omitted here.

As an example, the trigger condition may be the number of cells actually measured by the terminal device reaching the upper limit of the number of cells required by the network device to be measured by the terminal device, or that the terminal device discovers at least one neighbor cell corresponding to a frequency point that is not configured by the network device.

In some embodiments of the present disclosure, as shown in FIG. 3, the method 200 may further include:
the terminal device transmitting a fifth message to the network device, the fifth message being used to notify the network device that the terminal device has received the third configuration information.

Further, the terminal device may obtain the characteristic information of the neighbor cell based on the third configuration information, and/or report the first information when the trigger condition is met.

To summarize, with the technical solution of the embodiment of the present disclosure, the satellite cell does not need to maintain a huge amount of terrestrial neighbor cell information, but instead performs mobility control, such as cell reselection, cell handover, and the like, between the satellite communication system and the terrestrial communication system on demand according to the first information reported by the terminal device, so as to avoid the complexity for a satellite cell to maintain a large amount of dynamic terrestrial cell information, while increasing the flexibility of the terminal device to measure terrestrial cells. This is because the search process for the terrestrial cell of the terminal device can be independent on the target frequency point related information configured by the satellite cell.

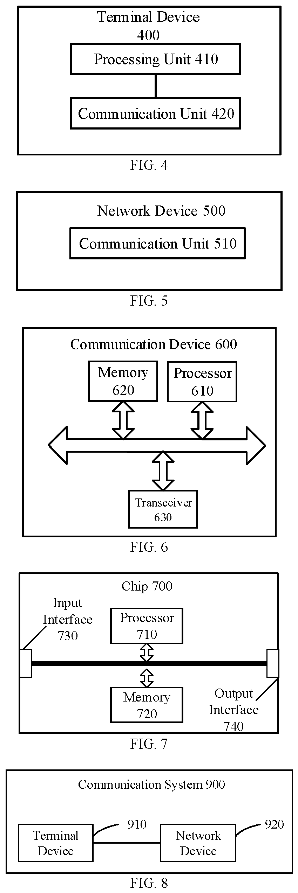

The method embodiments of the present disclosure have been described in detail above with reference to FIGS. 2-3, and the apparatus embodiments of the present disclosure will be described in detail below with reference to FIGS. 4-8. It can be appreciated that the apparatus embodiments and the method embodiments correspond to each other, and for similar descriptions, reference can be made to the method embodiments.

FIG. 4 shows a schematic block diagram of a terminal device 400 according to an embodiment of the present disclosure. As shown in FIG. 4, the terminal device 400 includes:
a processing unit 410 configured to obtain characteristic information of a neighbor cell; and
a communication unit 420 configured to transmit first information to a network device, the first information including the characteristic information of the neighbor cell and/or characteristic information of the terminal device.

In some embodiments of the present disclosure, the characteristic information of the neighbor cell may include at least one of
first indication information, operator-related network identification information of the neighbor cell, Tracking Area (TA) configuration information of the neighbor cell, frequency point configuration information of the neighbor cell, Synchronization Measurement Timing Configuration (SMTC) information of the neighbor cell, Cell Global Identity (CGI) configuration information of the neighbor cell, Physical Cell Identifier (PCI) configuration information of the neighbor cell, beam configuration information of the neighbor cell, Sub-Carrier Spacing (SCS) configuration information of the neighbor cell, bandwidth configuration information of the neighbor cell, a cell-level signal measurement result of the neighbor cell, or a beam-level measurement result of the neighbor cell, the first indication information indicating whether a terrestrial neighbor cell is near the terminal device and/or whether a neighbor cell not configured by the network device is near the terminal device.

In some embodiments of the present disclosure, the first information may be transmitted via a first message, and the first message may be uplink signaling in a random access procedure, or dedicated signaling after the terminal device enters a connected state.

In some embodiments of the present disclosure, the uplink signaling in the random access procedure may include a third message in a contention-based four-step access procedure, or a first message in a contention-based two-step access procedure.

In some embodiments of the present disclosure, the communication unit 420 may be further configured to:
transmit a second message to the network device, the second message being used to request the network device to transmit the first information.

In some embodiments of the present disclosure, the second message may be a first message in a random access procedure, or a third message in a contention-based four-step access procedure, or uplink dedicated signaling after the terminal device enters a connected state.

In some embodiments of the present disclosure, the communication unit 420 may be further configured to:
transmit the first information to the network device in response to receiving a third message transmitted by the network device, the third message indicating that the network device allows the terminal device to transmit the first information.

In some embodiments of the present disclosure, the communication unit 420 may be further configured to:
receive first configuration information and/or second configuration information transmitted by the network device, the first configuration information being used to configure content included in the first information reported by the terminal device, and the second configuration information being used to configure a format in which the terminal device reports the first information.

In some embodiments of the present disclosure, the first configuration information and/or the second configuration information may be transmitted via a third message, the third message indicating that the network device allows the terminal device to transmit the first information.

In some embodiments of the present disclosure, the processing unit 410 may be further configured to:
determine the content included in the first information according to the first configuration information; and/or
determine the format in which the terminal device reports the first information according to the second configuration information.

In some embodiments of the present disclosure, the communication unit 420 may be further configured to:
transmit a fourth message to the network device, the fourth message being used to request the network device to configure configuration information for obtaining the characteristic information of the neighbor cell and/or configuration information for triggering reporting of the characteristic information of the neighbor cell; and
receive third configuration information transmitted by the network device, the third configuration information being used by the terminal device to obtain the characteristic information of the neighbor cell and/or trigger the reporting of the characteristic information of the neighbor cell.

In some embodiments of the present disclosure, the communication unit 420 may be further configured to:
transmit a fifth message to the network device, the fifth message being used to notify the network device that the terminal device has received the third configuration information.

In some embodiments of the present disclosure, the processing unit 410 may be further configured to:
obtain the characteristic information of the neighbor cell and/or trigger the reporting of the characteristic information of the neighbor cell according to the third configuration information.

In some embodiments of the present disclosure, the fourth message may include at least one of:
second indication information indicating that the terminal device requests a Measurement Gap (MG) configuration;
a desired MG configuration of the terminal device;
a type of task the terminal device expects to perform; or
third indication information indicating that the terminal device desires to leave a current network connection.

In some embodiments of the present disclosure, the type of task the terminal device expects to perform may include: terrestrial neighbor cell search, terrestrial neighbor cell search and terrestrial neighbor cell measurement, non-public network measurement, and neighbor cell search and neighbor cell measurement.

In some embodiments of the present disclosure, the third configuration information may include at least one of:
a Measurement Gap (MG) configuration allowed by the network device;
an upper limit on a number of frequency points required by the network device to be measured by the terminal device;
an upper limit on a number of cells required by the network device to be measured by the terminal device; or
a trigger condition for the terminal device to report the characteristic information of the neighbor cell.

In some embodiments of the present disclosure, the characteristic information of the terminal device may include at least one of:
location information of the terminal device; or
capability information of the terminal device.

In some embodiments of the present disclosure, the capability information of the terminal device may include at least one of:
a frequency band or frequency band combination supported by the terminal device;
a bandwidth supported by the terminal device;
whether the terminal device supports communication with a non-terrestrial cell;
whether the terminal device supports communication with a terrestrial cell;
whether the terminal device supports simultaneous communication with a non-terrestrial cell and a terrestrial cell;
whether the terminal device supports a Dual Connection (DC) function; or
whether the terminal device supports a Carrier Aggregation (CA) function.

In some embodiments, the above communication unit may be a communication interface or a transceiver, or an input/output interface of a communication chip or a system-on-chip. The above processing unit may be one or more processors.

It can be appreciated that the terminal device 400 according to the embodiment of the present disclosure may correspond to the terminal device in the method embodiment of the present disclosure, and the above and other operations and/or functions of the respective units in the terminal device 400 are provided for the purpose of implementing the process flow corresponding to the terminal device in the method 200 shown in FIGS. 2-3, and details thereof will be not omitted here for brevity.

FIG. 5 shows a schematic block diagram of a network device according to an embodiment of the present disclosure. As shown in FIG. 5, the network device 500 includes:
a communication unit 510 configured to receive first information transmitted by a terminal device, the first information including characteristic information of a neighbor cell and/or characteristic information of the terminal device.

In some embodiments of the present disclosure, the characteristic information of the neighbor cell may include at least one of:
first indication information, operator-related network identification information of the neighbor cell, Tracking Area (TA) configuration information of the neighbor cell, frequency point configuration information of the neighbor cell, Synchronization Measurement Timing Configuration (SMTC) information of the neighbor cell, Cell Global Identity (CGI) configuration information of the neighbor cell, Physical Cell Identifier (PCI) configuration information of the neighbor cell, beam configuration information of the neighbor cell, Sub-Carrier Spacing (SCS) configuration information of the neighbor cell, bandwidth configuration information of the neighbor cell, a cell-level signal measurement result of the neighbor cell, or a beam-level measurement result of the neighbor cell, the first indication information indicating whether a terrestrial neighbor cell is near the terminal device and/or whether a neighbor cell not configured by the network device is near the terminal device.

In some embodiments of the present disclosure, the first information may be transmitted via a first message, and the first message may be uplink signaling in a random access procedure, or dedicated signaling after the terminal device enters a connected state.

In some embodiments of the present disclosure, the uplink signaling in the random access procedure may include a third message in a contention-based four-step access procedure, or a first message in a contention-based two-step access procedure.

In some embodiments of the present disclosure, the communication unit 510 may be further configured to:
receive a second message transmitted by the terminal device, the second message being used to request the network device to transmit the first information.

In some embodiments of the present disclosure, the second message may be a first message in a random access procedure, or a third message in a contention-based four-step access procedure, or uplink dedicated signaling after the terminal device enters a connected state.

In some embodiments of the present disclosure, the communication unit 510 may be further configured to:
transmit a third message to the terminal device, the third message indicating that the network device allows the terminal device to transmit the first information.

In some embodiments of the present disclosure, the communication unit 510 may be further configured to:
transmit first configuration information and/or second configuration information to the terminal device, the first configuration information being used to configure content included in the first information reported by the terminal device, and the second configuration information being used to configure a format in which the terminal device reports the first information.

In some embodiments of the present disclosure, the first configuration information and/or the second configuration information may be transmitted via a third message, the third message indicating that the network device allows the terminal device to transmit the first information.

In some embodiments of the present disclosure, the communication unit 510 may be further configured to:
receive a fourth message transmitted by the terminal device, the fourth message being used to request the network device to configure configuration information for obtaining the characteristic information of the neighbor cell and/or configuration information for triggering reporting of the characteristic information of the neighbor cell; and
transmit third configuration information to the terminal device, the third configuration information being used by the terminal device to obtain the characteristic information of the neighbor cell and/or trigger the reporting of the characteristic information of the neighbor cell.

In some embodiments of the present disclosure, the communication unit 510 may be further configured to:
receive a fifth message transmitted by the terminal device, the fifth message being used to notify the network device that the terminal device has received the third configuration information.

In some embodiments of the present disclosure, the fourth message may include at least one of:
second indication information indicating that the terminal device requests a Measurement Gap (MG) configuration;
a desired MG configuration of the terminal device;
a type of task the terminal device expects to perform; or
third indication information indicating that the terminal device desires to leave a current network connection.

In some embodiments of the present disclosure, the type of task the terminal device expects to perform may include: terrestrial neighbor cell search, terrestrial neighbor cell search and terrestrial neighbor cell measurement, non-public network measurement, and neighbor cell search and neighbor cell measurement.

In some embodiments of the present disclosure, the third configuration information may include at least one of:
a Measurement Gap (MG) configuration allowed by the network device;
an upper limit on a number of frequency points required by the network device to be measured by the terminal device;
an upper limit on a number of cells required by the network device to be measured by the terminal device; or
a trigger condition for the terminal device to report the characteristic information of the neighbor cell.

In some embodiments of the present disclosure, the characteristic information of the terminal device may include at least one of:
location information of the terminal device; or
capability information of the terminal device.

In some embodiments of the present disclosure, the capability information of the terminal device may include at least one of:
a frequency band or frequency band combination supported by the terminal device;
a bandwidth supported by the terminal device;
whether the terminal device supports communication with a non-terrestrial cell;
whether the terminal device supports communication with a terrestrial cell;
whether the terminal device supports simultaneous communication with a non-terrestrial cell and a terrestrial cell;
whether the terminal device supports a Dual Connection (DC) function; or
whether the terminal device supports a Carrier Aggregation (CA) function.

In some embodiments, the above communication unit may be a communication interface or a transceiver, or an input/output interface of a communication chip or a system-on-chip. The above processing unit may be one or more processors.

It can be appreciated that the network device 500 according to the embodiment of the present disclosure may correspond to the network device in the method embodiment of the present disclosure, and the above and other operations and/or functions of the respective units in the network device 500 are provided for the purpose of implementing the process flow corresponding to the network device in the method 200 shown in FIGS. 2-3, and details thereof will be not omitted here for brevity.

FIG. 6 is a schematic diagram showing a structure of a communication device 600 according to an embodiment of the present disclosure. The communication device 600 shown in FIG. 6 includes a processor 610, and the processor 610 can invoke and execute a computer program from a memory to implement the method in the embodiment of the present disclosure.

In some embodiments of the present disclosure, as shown in FIG. 6, the communication device 600 may further include a memory 620. The processor 610 can invoke and execute a computer program from the memory 620 to implement the method in the embodiment of the present disclosure.

The memory 620 may be a separate device independent from the processor 610, or may be integrated in the processor 610.

In some embodiments of the present disclosure, as shown in FIG. 6, the communication device 600 may further include a transceiver 630, and the processor 610 may control the transceiver 630 to communicate with other devices, and in particular, transmit information or data to other devices, or receive information or data transmitted by other devices.

Here, the transceiver 630 may include a transmitter and a receiver. The transceiver 630 may further include one or more antennas.

In some embodiments of the present disclosure, the communication device 600 may specifically be the network device according to the embodiment of the present disclosure, and the communication device 600 may implement the corresponding processes implemented by the network device in any of the methods according to the embodiments of the present disclosure. For the sake of brevity, details thereof will be omitted here.

In some embodiments of the present disclosure, the communication device 600 may specifically be the mobile terminal/terminal device according to the embodiment of the present disclosure, and the communication device 600 may implement the corresponding processes implemented by the mobile terminal/terminal device in any of the methods according to the embodiments of the present disclosure. For the sake of brevity, details thereof will be omitted here.

FIG. 7 is a schematic diagram showing a structure of a chip according to an embodiment of the present disclosure. The chip 700 shown in FIG. 7 includes a processor 710, and the processor 710 can invoke and execute a computer program from a memory to implement the method in the embodiment of the present disclosure.

In some embodiments of the present disclosure, as shown in FIG. 7, the chip 700 may further include a memory 720. The processor 710 can invoke and execute a computer program from the memory 720 to implement the method in the embodiment of the present disclosure.

The memory 720 may be a separate device independent from the processor 710, or may be integrated in the processor 710.

In some embodiments of the present disclosure, the chip 700 may further include an input interface 730. The processor 710 can control the input interface 730 to communicate with other devices or chips, and in particular, obtain information or data transmitted by other devices or chips.

In some embodiments of the present disclosure, the chip 700 may further include an output interface 740. The processor 710 can control the output interface 740 to communicate with other devices or chips, and in particular, output information or data to other devices or chips.

In some embodiments of the present disclosure, the chip can be applied to the network device in the embodiment of the present disclosure, and the chip can implement the corresponding processes implemented by the network device in the various methods of the embodiments of the present disclosure. For the sake of brevity, details thereof will be omitted here.

In some embodiments of the present disclosure, the chip can be applied to the mobile terminal/terminal device in the embodiment of the present disclosure, and the chip can implement the corresponding processes implemented by the mobile terminal/terminal device in the various methods of the embodiments of the present disclosure. For the sake of brevity, details thereof will be omitted here.

It can be appreciated that the chip in the embodiment of the present disclosure may also be referred to as a system-level chip, a system-chip, a chip system, or a system-on-chip.

FIG. 8 is a schematic block diagram showing a communication system 900 according to an embodiment of the present disclosure. As shown in FIG. 8, the communication system 900 includes a terminal device 910 and a network device 920.

Here, the terminal device 910 can be configured to implement the corresponding functions implemented by the terminal device in the above method, and the network device 920 can be configured to implement the corresponding functions implemented by the network device in the above method. For the sake of brevity, details thereof will be omitted here.

It is to be noted that the processor in the embodiment of the present disclosure may be an integrated circuit chip with signal processing capability. In an implementation, the steps of the above method embodiments can be implemented by hardware integrated logic circuits in a processor or instructions in the form of software. The processor can be a general purpose processor, a Digital Signal Processor (DSP), an Application Specific Integrated Circuit (ASIC), a Field Programmable Gate Array (FPGA) or another programmable logic device, a discrete gate or transistor logic device, or a discrete hardware component. The methods, steps, and logical block diagrams disclosed in the embodiments of the present disclosure can be implemented or performed. The general purpose processor may be a microprocessor or any conventional processor. The steps of the methods disclosed in the embodiments of the present disclosure may be directly embodied as being performed and completed by a hardware decoding processor, or by a combination of hardware and software modules in the decoding processor. The software modules can be located in a known storage medium in the related art, such as random access memory, flash memory, read-only memory, programmable read-only memory, electrically erasable programmable memory, or register. The storage medium can be located in the memory, and the processor can read information from the memory and perform the steps of the above methods in combination with its hardware.

It can be appreciated that the memory in the embodiments of the present disclosure may be a volatile memory or a non-volatile memory, or may include both volatile and non-volatile memories. Here, the non-volatile memory may be a Read-Only Memory (ROM), a Programmable ROM (PROM), an Erasable PROM (EPROM), an Electrically EPROM (EEPROM), or a flash memory. The volatile memory may be a Random Access Memory (RAM), which is used as an external cache. As illustrative, rather than limiting, examples, many forms of RAMs are available, including Static RAM (SRAM), Dynamic RAM (DRAM), Synchronous DRAM (SDRAM), Double Data Rate SDRAM (DDR SDRAM), Enhanced SDRAM (ESDRAM), Synchlink DRAM (SLDRAM), and Direct Rambus RAM (DR RAM). It is to be noted that the memory used for the system and method described in the present disclosure is intended to include, but not limited to, these and any other suitable types of memories.

It can be appreciated that the above memories are exemplary only, rather than limiting the present disclosure. For example, the memory in the embodiment of the present disclosure may also be a Static RAM (SRAM), a Dynamic RAM (DRAM), a Synchronous DRAM (SDRAM), a Double Data Rate SDRAM (DDR SDRAM), an Enhanced SDRAM (ESDRAM), a Synch Link DRAM (SLDRAM), or a Direct Rambus RAM (DR RAM). That is, the memory in the embodiments of the present disclosure is intended to include, but not limited to, these and any other suitable types of memories.

An embodiment of the present disclosure also provides a computer readable storage medium for storing a computer program.

In some embodiments of the present disclosure, the computer readable storage medium can be applied to the network device in the embodiment of the present disclosure, and the computer program can cause a computer to perform corresponding procedures implemented by the network device in the method according to any of the embodiments of the present disclosure. Details thereof will be omitted here for simplicity.

In some embodiments of the present disclosure, the computer readable storage medium can be applied to the mobile terminal/terminal device in the embodiment of the present disclosure, and the computer program can cause a computer to perform corresponding procedures implemented by the mobile terminal/terminal device in the method according to any of the embodiments of the present disclosure. Details thereof will be omitted here for simplicity.

An embodiment of the present disclosure also provides a computer program product including computer program instructions.

In some embodiments of the present disclosure, the computer program product can be applied to the network device in the embodiment of the present disclosure, and the computer program instructions can cause a computer to perform corresponding procedures implemented by the network device in the method according to any of the embodiments of the present disclosure. Details thereof will be omitted here for simplicity.

In some embodiments of the present disclosure, the computer program product can be applied to the mobile terminal/terminal device in the embodiment of the present disclosure, and the computer program instructions can cause a computer to perform corresponding procedures implemented by the mobile terminal/terminal device in the method according to any of the embodiments of the present disclosure. Details thereof will be omitted here for simplicity.

An embodiment of the present disclosure also provides a computer program.

In some embodiments of the present disclosure, the computer program can be applied to the network device in the embodiment of the present disclosure. The computer program, when executed on a computer, can cause the computer to perform corresponding procedures implemented by the network device in the method according to any of the embodiments of the present disclosure. Details thereof will be omitted here for simplicity.

In some embodiments of the present disclosure, the computer program can be applied to the mobile terminal/terminal device in the embodiment of the present disclosure. The computer program, when executed on a computer, can cause the computer to perform corresponding procedures implemented by the mobile terminal/terminal device in the method according to any of the embodiments of the present disclosure. Details thereof will be omitted here for simplicity.

It can be appreciated by those skilled in the art that units and algorithm steps in the examples described in connection with the embodiments disclosed herein can be implemented in electronic hardware or any combination of computer software and electronic hardware. Whether these functions are executed by hardware or software depends on specific applications and design constraint conditions of the technical solutions. Those skilled in the art may use different methods for each specific application to implement the described functions, and such implementation is to be encompassed by the scope of this disclosure.

Those skilled in the art can clearly understand that, for the convenience and conciseness of the description, for the specific operation processes of the systems, devices, and units described above, reference can be made to the corresponding processes in the foregoing method embodiments, and details thereof will be omitted here.

In the embodiments of the present disclosure, it can be appreciated that the disclosed systems, devices, and methods may be implemented in other ways. For example, the device embodiments described above are illustrative only. For example, the divisions of the units are only divisions based on logical functions, and there may be other divisions in actual implementations. For example, more than one unit or component may be combined or integrated into another system, or some features can be ignored or omitted. In addition, the mutual coupling or direct coupling or communicative connection as shown or discussed may be indirect coupling or communicative connection between devices or units via some interfaces which may be electrical, mechanical, or in any other forms.

The units described as separate components may or may not be physically separated, and the components shown as units may or may not be physical units, that is, they may be co-located or distributed across a number of network elements. Some or all of the units may be selected according to actual needs to achieve the objects of the solutions of the embodiments.

In addition, the functional units in the embodiments of the present disclosure may be integrated into one processing unit, or alternatively be separate physical modules, or two or more units may be integrated into one unit.

When the function is implemented in the form of a software functional unit and sold or used as a standalone product, it can be stored in a computer readable storage medium. Based on this understanding, all or part of the technical solutions according to the embodiments of the present disclosure, or the part thereof that contributes to the prior art, can be embodied in the form of a software product. The computer software product may be stored in a storage medium and contain instructions to enable a computer device, such as a personal computer, a server, or a network device, etc., to perform all or part of the steps of the method described in each of the embodiments of the present disclosure. The storage medium may include a Universal Serial Bus flash drive, a mobile hard disk, a Read-Only Memory (ROM), a Random Access Memory (RAM), a magnetic disk, an optical disc, or any other medium capable of storing program codes.

While the specific embodiments of the present disclosure have been described above, the scope of the present disclosure is not limited to these embodiments. Various variants and alternatives can be made by those skilled in the art without departing from the scope of the present disclosure. These variants and alternatives are to be encompassed by the scope of present disclosure as defined by the claims as attached.

## Claims

1. A wireless communication method, comprising:
obtaining, by a terminal device, characteristic information of a neighbor cell; and
transmitting, by the terminal device, first information to a network device, the first information comprising the characteristic information of the neighbor cell and/or characteristic information of the terminal device.

2. The method according to claim 1, wherein the characteristic information of the neighbor cell comprises at least one of:
first indication information, operator-related network identification information of the neighbor cell, Tracking Area (TA) configuration information of the neighbor cell, frequency point configuration information of the neighbor cell, Synchronization Measurement Timing Configuration (SMTC) information of the neighbor cell, Cell Global Identity (CGI) configuration information of the neighbor cell, Physical Cell Identifier (PCI) configuration information of the neighbor cell, beam configuration information of the neighbor cell, Sub-Carrier Spacing (SCS) configuration information of the neighbor cell, bandwidth configuration information of the neighbor cell, a cell-level signal measurement result of the neighbor cell, or a beam-level measurement result of the neighbor cell,
the first indication information indicating whether a terrestrial neighbor cell is near the terminal device and/or whether a neighbor cell not configured by the network device is near the terminal device.

3. The method according to claim 1 or 2, wherein the first information is transmitted via a first message, and the first message is uplink signaling in a random access procedure, or dedicated signaling after the terminal device enters a connected state.

4. The method according to claim 3, wherein the uplink signaling in the random access procedure comprises a third message in a contention-based four-step access procedure, or a first message in a contention-based two-step access procedure.

5. The method according to any one of claims 1-4, further comprising:
transmitting, by the terminal device, a second message to the network device, the second message being used to request the network device to transmit the first information.

6. The method according to claim 5, wherein the second message is a first message in a random access procedure, or a third message in a contention-based four-step access procedure, or uplink dedicated signaling after the terminal device enters a connected state.

7. The method according to claim 5 or 6, wherein said transmitting, by the terminal device, the first information to the network device comprises:
transmitting, by the terminal device, the first information to the network device in response to receiving a third message transmitted by the network device, the third message indicating that the network device allows the terminal device to transmit the first information.

8. The method according to any one of claims 1-7, further comprising:
receiving, by the terminal device, first configuration information and/or second configuration information transmitted by the network device, the first configuration information being used to configure content included in the first information reported by the terminal device, and the second configuration information being used to configure a format in which the terminal device reports the first information.

9. The method according to claim 8, wherein the first configuration information and/or the second configuration information is transmitted via a third message, the third message indicating that the network device allows the terminal device to transmit the first information.

10. The method according to claim 8 or 9, further comprising:
determining, by the terminal device, the content included in the first information according to the first configuration information; and/or
determining, by the terminal device, the format in which the terminal device reports the first information according to the second configuration information.

11. The method according to any one of claims 1-10, further comprising:
transmitting, by the terminal device, a fourth message to the network device, the fourth message being used to request the network device to configure configuration information for obtaining the characteristic information of the neighbor cell and/or configuration information for triggering reporting of the characteristic information of the neighbor cell; and
receiving, by the terminal device, third configuration information transmitted by the network device, the third configuration information being used by the terminal device to obtain the characteristic information of the neighbor cell and/or trigger the reporting of the characteristic information of the neighbor cell.

12. The method according to claim 11, further comprising:
transmitting, by the terminal device, a fifth message to the network device, the fifth message being used to notify the network device that the terminal device has received the third configuration information.

13. The method according to claim 11 or 12, wherein said obtaining, by the terminal device, the characteristic information of the neighbor cell comprises:
obtaining, by the terminal device, the characteristic information of the neighbor cell and/or triggering, by the terminal device, the reporting of the characteristic information of the neighbor cell according to the third configuration information.

14. The method according to any one of claims 11-13, wherein the fourth message comprises at least one of:
second indication information indicating that the terminal device requests a Measurement Gap (MG) configuration;
a desired MG configuration of the terminal device;
a type of task the terminal device expects to perform; or
third indication information indicating that the terminal device desires to leave a current network connection.

15. The method according to claim 14, wherein the type of task the terminal device expects to perform comprises: terrestrial neighbor cell search, terrestrial neighbor cell search and terrestrial neighbor cell measurement, non-public network measurement, and neighbor cell search and neighbor cell measurement.

16. The method according to any one of claims 11-15, wherein the third configuration information comprises at least one of:
a Measurement Gap (MG) configuration allowed by the network device;
an upper limit on a number of frequency points required by the network device to be measured by the terminal device;
an upper limit on a number of cells required by the network device to be measured by the terminal device; or
a trigger condition for the terminal device to report the characteristic information of the neighbor cell.

17. The method according to any one of claims 1-16, wherein the characteristic information of the terminal device comprises at least one of:
location information of the terminal device; or
capability information of the terminal device.

18. The method according to claim 17, wherein the capability information of the terminal device comprises at least one of:
a frequency band or frequency band combination supported by the terminal device;
a bandwidth supported by the terminal device;
whether the terminal device supports communication with a non-terrestrial cell;
whether the terminal device supports communication with a terrestrial cell;
whether the terminal device supports simultaneous communication with a non-terrestrial cell and a terrestrial cell;
whether the terminal device supports a Dual Connection (DC) function; or
whether the terminal device supports a Carrier Aggregation (CA) function.

19. A wireless communication method, comprising:
receiving, by a network device, first information transmitted by a terminal device, the first information comprising characteristic information of a neighbor cell and/or characteristic information of the terminal device.

20. The method according to claim 19, wherein the characteristic information of the neighbor cell comprises at least one of:
first indication information, operator-related network identification information of the neighbor cell, Tracking Area (TA) configuration information of the neighbor cell, frequency point configuration information of the neighbor cell, Synchronization Measurement Timing Configuration (SMTC) information of the neighbor cell, Cell Global Identity (CGI) configuration information of the neighbor cell, Physical Cell Identifier (PCI) configuration information of the neighbor cell, beam configuration information of the neighbor cell, Sub-Carrier Spacing (SCS) configuration information of the neighbor cell, bandwidth configuration information of the neighbor cell, a cell-level signal measurement result of the neighbor cell, or a beam-level measurement result of the neighbor cell,
the first indication information indicating whether a terrestrial neighbor cell is near the terminal device and/or whether a neighbor cell not configured by the network device is near the terminal device.

21. The method according to claim 19 or 20, wherein the first information is transmitted via a first message, and the first message is uplink signaling in a random access procedure, or dedicated signaling after the terminal device enters a connected state.

22. The method according to claim 21, wherein the uplink signaling in the random access procedure comprises a third message in a contention-based four-step access procedure, or a first message in a contention-based two-step access procedure.

23. The method according to any one of claims 19-22, further comprising:
receiving, by the network device, a second message transmitted by the terminal device, the second message being used to request the network device to transmit the first information.

24. The method according to claim 23, wherein the second message is a first message in a random access procedure, or a third message in a contention-based four-step access procedure, or uplink dedicated signaling after the terminal device enters a connected state.

25. The method according to claim 23 or 24, further comprising:
transmitting, by the network device, a third message to the terminal device, the third message indicating that the network device allows the terminal device to transmit the first information.

26. The method according to any one of claims 19-25, further comprising:
transmitting, by the network device, first configuration information and/or second configuration information to the terminal device, the first configuration information being used to configure content included in the first information reported by the terminal device, and the second configuration information being used to configure a format in which the terminal device reports the first information.

27. The method according to claim 26, wherein the first configuration information and/or the second configuration information is transmitted via a third message, the third message indicating that the network device allows the terminal device to transmit the first information.

28. The method according to any one of claims 19-27, further comprising:
receiving, by the network device, a fourth message transmitted by the terminal device, the fourth message being used to request the network device to configure configuration information for obtaining the characteristic information of the neighbor cell and/or configuration information for triggering reporting of the characteristic information of the neighbor cell; and
transmitting, by the network device, third configuration information to the terminal device, the third configuration information being used by the terminal device to obtain the characteristic information of the neighbor cell and/or trigger the reporting of the characteristic information of the neighbor cell.

29. The method according to claim 28, further comprising:
receiving, by the network device, a fifth message transmitted by the terminal device, the fifth message being used to notify the network device that the terminal device has received the third configuration information.

30. The method according to claim 28 or 29, wherein the fourth message comprises at least one of:
second indication information indicating that the terminal device requests a Measurement Gap (MG) configuration;
a desired MG configuration of the terminal device;
a type of task the terminal device expects to perform; or
third indication information indicating that the terminal device desires to leave a current network connection.

31. The method according to any one of claims 28-30, wherein the type of task the terminal device expects to perform comprises: terrestrial neighbor cell search, terrestrial neighbor cell search and terrestrial neighbor cell measurement, non-public network measurement, and neighbor cell search and neighbor cell measurement.

32. The method according to any one of claims 28-31, wherein the third configuration information comprises at least one of:
a Measurement Gap (MG) configuration allowed by the network device;
an upper limit on a number of frequency points required by the network device to be measured by the terminal device;
an upper limit on a number of cells required by the network device to be measured by the terminal device; or
a trigger condition for the terminal device to report the characteristic information of the neighbor cell.

33. The method according to any one of claims 19-32, wherein the characteristic information of the terminal device comprises at least one of:
location information of the terminal device; or
capability information of the terminal device.

34. The method according to claim 33, wherein the capability information of the terminal device comprises at least one of:
a frequency band or frequency band combination supported by the terminal device;
a bandwidth supported by the terminal device;
whether the terminal device supports communication with a non-terrestrial cell;
whether the terminal device supports communication with a terrestrial cell;
whether the terminal device supports simultaneous communication with a non-terrestrial cell and a terrestrial cell;
whether the terminal device supports a Dual Connection (DC) function; or
whether the terminal device supports a Carrier Aggregation (CA) function.

35. A terminal device, comprising:
a processing unit configured to obtain characteristic information of a neighbor cell; and
a communication unit configured to transmit first information to a network device, the first information comprising the characteristic information of the neighbor cell and/or characteristic information of the terminal device.

36. The terminal device according to claim 35, wherein the characteristic information of the neighbor cell comprises at least one of:
first indication information, operator-related network identification information of the neighbor cell, Tracking Area (TA) configuration information of the neighbor cell, frequency point configuration information of the neighbor cell, Synchronization Measurement Timing Configuration (SMTC) information of the neighbor cell, Cell Global Identity (CGI) configuration information of the neighbor cell, Physical Cell Identifier (PCI) configuration information of the neighbor cell, beam configuration information of the neighbor cell, Sub-Carrier Spacing (SCS) configuration information of the neighbor cell, bandwidth configuration information of the neighbor cell, a cell-level signal measurement result of the neighbor cell, or a beam-level measurement result of the neighbor cell,
the first indication information indicating whether a terrestrial neighbor cell is near the terminal device and/or whether a neighbor cell not configured by the network device is near the terminal device.

37. The terminal device according to claim 35 or 36, wherein the first information is transmitted via a first message, and the first message is uplink signaling in a random access procedure, or dedicated signaling after the terminal device enters a connected state.

38. The terminal device according to claim 37, wherein the uplink signaling in the random access procedure comprises a third message in a contention-based four-step access procedure, or a first message in a contention-based two-step access procedure.

39. The terminal device according to any one of claims 35-38, wherein the communication unit is further configured to:
transmit a second message to the network device, the second message being used to request the network device to transmit the first information.

40. The terminal device according to claim 39, wherein the second message is a first message in a random access procedure, or a third message in a contention-based four-step access procedure, or uplink dedicated signaling after the terminal device enters a connected state.

41. The terminal device according to claim 39 or 40, wherein the communication unit is further configured to:
transmit the first information to the network device in response to receiving a third message transmitted by the network device, the third message indicating that the network device allows the terminal device to transmit the first information.

42. The terminal device according to any one of claims 35-41, wherein the communication unit is further configured to:
receive first configuration information and/or second configuration information transmitted by the network device, the first configuration information being used to configure content included in the first information reported by the terminal device, and the second configuration information being used to configure a format in which the terminal device reports the first information.

43. The terminal device according to claim 42, wherein the first configuration information and/or the second configuration information is transmitted via a third message, the third message indicating that the network device allows the terminal device to transmit the first information.

44. The terminal device according to claim 42 or 43, wherein the processing unit is further configured to:
determine the content included in the first information according to the first configuration information; and/or
determine the format in which the terminal device reports the first information according to the second configuration information.

45. The terminal device according to any one of claims 35-44, wherein the communication unit is further configured to:
transmit a fourth message to the network device, the fourth message being used to request the network device to configure configuration information for obtaining the characteristic information of the neighbor cell and/or configuration information for triggering reporting of the characteristic information of the neighbor cell; and
receive third configuration information transmitted by the network device, the third configuration information being used by the terminal device to obtain the characteristic information of the neighbor cell and/or trigger the reporting of the characteristic information of the neighbor cell.

46. The terminal device according to claim 45, wherein the communication unit is further configured to:
transmit a fifth message to the network device, the fifth message being used to notify the network device that the terminal device has received the third configuration information.

47. The terminal device according to claim 45 or 46, wherein the processing unit is further configured to:
obtain the characteristic information of the neighbor cell and/or trigger the reporting of the characteristic information of the neighbor cell according to the third configuration information.

48. The terminal device according to any one of claims 45-47, wherein the fourth message comprises at least one of:
second indication information indicating that the terminal device requests a Measurement Gap (MG) configuration;
a desired MG configuration of the terminal device;
a type of task the terminal device expects to perform; or
third indication information indicating that the terminal device desires to leave a current network connection.

49. The terminal device according to any one of claims 45-48, wherein the type of task the terminal device expects to perform comprises: terrestrial neighbor cell search, terrestrial neighbor cell search and terrestrial neighbor cell measurement, non-public network measurement, and neighbor cell search and neighbor cell measurement.

50. The terminal device according to any one of claims 45-49, wherein the third configuration information comprises at least one of:
a Measurement Gap (MG) configuration allowed by the network device;
an upper limit on a number of frequency points required by the network device to be measured by the terminal device;
an upper limit on a number of cells required by the network device to be measured by the terminal device; or
a trigger condition for the terminal device to report the characteristic information of the neighbor cell.

51. The terminal device according to any one of claims 35-50, wherein the characteristic information of the terminal device comprises at least one of:
location information of the terminal device; or
capability information of the terminal device.

52. The terminal device according to claim 51, wherein the capability information of the terminal device comprises at least one of:
a frequency band or frequency band combination supported by the terminal device;
a bandwidth supported by the terminal device;
whether the terminal device supports communication with a non-terrestrial cell;
whether the terminal device supports communication with a terrestrial cell;
whether the terminal device supports simultaneous communication with a non-terrestrial cell and a terrestrial cell;
whether the terminal device supports a Dual Connection (DC) function; or
whether the terminal device supports a Carrier Aggregation (CA) function.

53. A network device, comprising:
a communication unit configured to receive first information transmitted by a terminal device, the first information comprising characteristic information of a neighbor cell and/or characteristic information of the terminal device.

54. The network device according to claim 53, wherein the characteristic information of the neighbor cell comprises at least one of:
first indication information, operator-related network identification information of the neighbor cell, Tracking Area (TA) configuration information of the neighbor cell, frequency point configuration information of the neighbor cell, Synchronization Measurement Timing Configuration (SMTC) information of the neighbor cell, Cell Global Identity (CGI) configuration information of the neighbor cell, Physical Cell Identifier (PCI) configuration information of the neighbor cell, beam configuration information of the neighbor cell, Sub-Carrier Spacing (SCS) configuration information of the neighbor cell, bandwidth configuration information of the neighbor cell, a cell-level signal measurement result of the neighbor cell, or a beam-level measurement result of the neighbor cell,
the first indication information indicating whether a terrestrial neighbor cell is near the terminal device and/or whether a neighbor cell not configured by the network device is near the terminal device.

55. The network device according to claim 53 or 54, wherein the first information is transmitted via a first message, and the first message is uplink signaling in a random access procedure, or dedicated signaling after the terminal device enters a connected state.

56. The network device according to claim 55, wherein the uplink signaling in the random access procedure comprises a third message in a contention-based four-step access procedure, or a first message in a contention-based two-step access procedure.

57. The network device according to any one of claims 53-56, wherein the communication unit is further configured to:
receive a second message transmitted by the terminal device, the second message being used to request the network device to transmit the first information.

58. The network device according to claim 57, wherein the second message is a first message in a random access procedure, or a third message in a contention-based four-step access procedure, or uplink dedicated signaling after the terminal device enters a connected state.

59. The network device according to claim 57 or 58, wherein the communication unit is further configured to:
transmit a third message to the terminal device, the third message indicating that the network device allows the terminal device to transmit the first information.

60. The network device according to any one of claims 53-59, wherein the communication unit is further configured to:
transmit first configuration information and/or second configuration information to the terminal device, the first configuration information being used to configure content included in the first information reported by the terminal device, and the second configuration information being used to configure a format in which the terminal device reports the first information.

61. The network device according to claim 60, wherein the first configuration information and/or the second configuration information is transmitted via a third message, the third message indicating that the network device allows the terminal device to transmit the first information.

62. The network device according to any one of claims 53-61, wherein the communication unit is further configured to:
receive a fourth message transmitted by the terminal device, the fourth message being used to request the network device to configure configuration information for obtaining the characteristic information of the neighbor cell and/or configuration information for triggering reporting of the characteristic information of the neighbor cell; and
transmit third configuration information to the terminal device, the third configuration information being used by the terminal device to obtain the characteristic information of the neighbor cell and/or trigger the reporting of the characteristic information of the neighbor cell.

63. The network device according to claim 62, wherein the communication unit is further configured to:
receive a fifth message transmitted by the terminal device, the fifth message being used to notify the network device that the terminal device has received the third configuration information.

64. The network device according to claim 62 or 63, wherein the fourth message comprises at least one of:
second indication information indicating that the terminal device requests a Measurement Gap (MG) configuration;
a desired MG configuration of the terminal device;
a type of task the terminal device expects to perform; or
third indication information indicating that the terminal device desires to leave a current network connection.

65. The network device according to claim 64, wherein the type of task the terminal device expects to perform comprises: terrestrial neighbor cell search, terrestrial neighbor cell search and terrestrial neighbor cell measurement, non-public network measurement, and neighbor cell search and neighbor cell measurement.

66. The network device according to any one of claims 62-65, wherein the third configuration information comprises at least one of:
a Measurement Gap (MG) configuration allowed by the network device;
an upper limit on a number of frequency points required by the network device to be measured by the terminal device;
an upper limit on a number of cells required by the network device to be measured by the terminal device; or
a trigger condition for the terminal device to report the characteristic information of the neighbor cell.

67. The network device according to any one of claims 53-66, wherein the characteristic information of the terminal device comprises at least one of:
location information of the terminal device; or
capability information of the terminal device.

68. The network device according to claim 67, wherein the capability information of the terminal device comprises at least one of:
a frequency band or frequency band combination supported by the terminal device;
a bandwidth supported by the terminal device;
whether the terminal device supports communication with a non-terrestrial cell;
whether the terminal device supports communication with a terrestrial cell;
whether the terminal device supports simultaneous communication with a non-terrestrial cell and a terrestrial cell;
whether the terminal device supports a Dual Connection (DC) function; or
whether the terminal device supports a Carrier Aggregation (CA) function.

69. A terminal device, comprising a processor and a memory, wherein the memory has a computer program stored thereon, and the processor is configured to invoke and execute the computer program stored in the memory to perform the method according to any of claims 1 to 18.

70. A chip, comprising a processor configured to invoke and execute a computer program from a memory, to cause a device provided with the chip to perform the method according to any of claims 1 to 18.

71. A computer-readable storage medium, storing a computer program that causes a computer to perform the method according to any of claims 1 to 18.

72. A computer program product, comprising computer program instructions that cause a computer to perform the method according to any of claims 1 to 18.

73. A computer program, causing a computer to perform the method according to any of claims 1 to 18.

74. A network device, comprising a processor and a memory, wherein the memory has a computer program stored thereon, and the processor is configured to invoke and execute the computer program stored in the memory to perform the method according to any of claims 19 to 34.

75. A chip, comprising a processor configured to invoke and execute a computer program from a memory, to cause a device provided with the chip to perform the method according to any of claims 19 to 34.

76. A computer-readable storage medium, storing a computer program that causes a computer to perform the method according to any of claims 19 to 34.

77. A computer program product, comprising computer program instructions that cause a computer to perform the method according to any of claims 19 to 34.

78. A computer program, causing a computer to perform the method according to any of claims 19 to 34.
